# EUROPEAN PATENT APPLICATION

(11) **EP 4 254 542 A1**
(43) Date of publication of application: **04.10.2023**
(21) Application number: 21897829.4
(22) Date of filing: 17.11.2021
(51) Int. Cl.: H01M 4/13, H01M 4/62, H01M 10/052, H01M 50/411, H01M 50/434, H01M 50/449, H01M 50/489

(54) **SECONDARY BATTERY**

(30) Priority: 30.11.2020 JP 2020199074; 30.11.2020 JP 2020199075
(71) Applicant: Panasonic Intellectual Property Management Co., Ltd., Kadoma-shi, Osaka 571-0057 (JP)
(72) Inventor: UCHIDA Shuhei, Kadoma-shi, Osaka 571-0057 (JP)
(74) Representative: Novagraaf International SA
(86) International application number: PCT/JP2021/042297
(87) International publication number: WO 2022/113855

(57) **Abstract**

A secondary battery includes a first electrode, a second electrode, and a separator interposed between the first electrode and the second electrode. One of the first electrode and the second electrode is a positive electrode, and the other is a negative. The first electrode includes a first electrode active material layer, and the first electrode active material layer includes a first electrode active material, and a first fire retardant including a halogen atom. The separator includes a second fire retardant.

## Description

### TECHNICAL FIELD

The present disclosure relates to a secondary battery.

### BACKGROUND ART

Non-aqueous electrolyte secondary batteries such as lithium ion secondary batteries have a high output and a high energy density. Therefore, non-aqueous electrolyte secondary batteries are used as a power source for small consumer applications, power storage devices, and electric vehicles.

For the negative electrode active material of non-aqueous electrolyte secondary batteries, conventionally, various materials have been proposed. For a negative electrode active material having a high energy density, use of a silicon compound (e.g., silicon oxide) that forms an alloy with lithium or silicon particles have been proposed (e.g., Patent Literature 1).

Patent Literature 2 has proposed a composite electrode plate for a lithium ion battery, including "a battery electrode plate and a functional coating layer composed on the battery electrode plate surface, wherein the functional coating layer is produced from a functional material and a bonding agent, the functional material is one or more selected from a phosphorus-containing compound, a nitrogen-containing compound, and an inorganic silicon compound, and the battery electrode plate is a battery positive electrode and/or a battery negative electrode ".

### Citation List

### Patent Document

Patent Literature 1: Japanese Patent Publication No. 2010-212228
Patent Literature 2: Japanese Translation of PCT International Application Publication No.2017-534138

### SUMMARY OF THE INVENTION

### PROBLEM TO BE SOLVED BY THE INVENTION

Recently, demand for a high energy density non-aqueous electrolyte secondary battery has been increasing even more. When the energy density of the non-aqueous electrolyte secondary battery is increased, battery safety measures in abnormal situations are required at a higher level.

### MEANS FOR SOLVING THE PROBLEM

An aspect of the present disclosure relates to a secondary battery. The secondary battery includes a first electrode, a second electrode, and a separator interposed between the first electrode and the second electrode, wherein the first electrode includes a first electrode active material layer, the first electrode active material layer includes a first electrode active material and a first fire retardant including a halogen atom, and the separator includes a second fire retardant.

### EFFECTS OF THE INVENTION

The present disclosure achieves a highly safe secondary battery.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE DRAWINGS

[FIG. 1] FIG. 1 is a partially cutaway schematic perspective view of a secondary battery of an embodiment of the present disclosure.
[FIG. 2] FIG. 2 is a partially enlarged schematic cross sectional view of an electrode group in the secondary battery in an embodiment of the present disclosure.
[FIG. 3] FIG. 3 is a partially enlarged schematic cross sectional view of an electrode group in the secondary battery in an embodiment of the present disclosure.

### DESCRIPTION OF THE EMBODIMENTS

In the following, examples of the embodiment of the present disclosure are described. In the following, examples are illustrated for embodiments, but the present disclosure is not limited to the examples below. In the following description, specific numerical values and materials may be exemplified, but other numerical values and other materials may be used as long as the effect of the present disclosure is obtained. In this specification, "range of numeral value A to numeral value B" includes the numeral value A and numeral value B in the range.

### (Secondary battery)

The secondary battery in this embodiment includes a first electrode, a second electrode, and a separator interposed between the first electrode and second electrode. The first electrode is one of the positive electrode and negative electrode in the secondary battery. The second electrode is the other of the positive electrode and negative electrode of the secondary battery. The first electrode may be the positive electrode, and the second electrode may be the negative electrode, or the first electrode may be the negative electrode, and the second electrode may be the positive electrode.

The first electrode includes the first electrode active material layer. The first electrode active material layer includes the first electrode active material. The second electrode generally includes the second electrode active material layer. The second electrode active material layer generally includes a second electrode active material. When the first electrode is the positive electrode, the first electrode active material layer is the positive electrode active material layer, the second electrode active material layer is the negative electrode active material layer, the first electrode active material is the positive electrode active material, and the second electrode active material is the negative electrode active material. When the first electrode is the negative electrode, the first electrode active material layer is the negative electrode active material layer, the second electrode active material layer is the positive electrode active material layer, the first electrode active material is the negative electrode active material, and the second electrode active material is the positive electrode active material. The positive electrode active material layer is generally disposed on a surface of the positive electrode current collector. The negative electrode active material layer is generally disposed on a surface of the negative electrode current collector.

The first electrode active material layer further includes a first fire retardant including a halogen atom. In other words, at least one of the positive electrode active material layer and the negative electrode active material layer as the first electrode active material layer includes the first fire retardant. The separator also includes a fire retardant (second fire retardant).

The inventors of the present application have found that the battery temperature increase under an abnormal situation can be suppressed, without greatly reducing battery characteristics, by adding a specific fire retardant to the first electrode (positive electrode or negative electrode) and separator. The present disclosure is based on such new findings.

In the following, the first fire retardant included in the first electrode active material layer may be referred to as "fire retardant (R1)", and the second fire retardant included in the separator may be referred to as "fire retardant (R2)".

### (First fire retardant (R1))

The first fire retardant (R1) included in the first electrode active material layer exhibits fire retarding effects by releasing halogen atoms under high temperature. Therefore, the secondary battery including the first fire retardant (R1) can suppress excessive heat generation under an abnormal situation.

In an initial period of exothermic reaction, electrolyte reacts with the negative electrode having a larger reaction area than the positive electrode with priority, to generate H radical, and the H radical reacts with other products repeatedly, which facilitates heat generation. For example, O²⁻and/or O₂ generated from the positive electrode active material reacts with H radicals to facilitate heat generation. However, by disposing the fire retardant (R1) including halogen atoms inside the negative electrode, the fire retardant (R1) deactivates H radicals, and the exothermic reaction is suppressed. Meanwhile, by also disposing the fire retardant (R1) including halogen atoms in the positive electrode, the fire retardant (R1) deactivates H radicals from the negative electrode, and the exothermic reaction is suppressed. Thus, by disposing the fire retardant (R1) including halogen atoms in at least one of the positive electrode and negative electrode, heat generation can be suppressed.

The fire retardant (R1) may satisfy at least one of the following conditions (1) and (2). Preferably, however, the fire retardant (R1) satisfies both of the conditions (1) and (2) below.
(1) The fire retardant (R1) includes a cyclic structure to which a halogen atom is bonded. The cyclic structure may be an aromatic ring, or may not be an aromatic ring. In this case, all of the halogen atoms may be bonded to the cyclic structure, or only a part of the halogen atoms may be bonded to the cyclic structure. Preferably, the structure in which a halogen atom is bonded to the cyclic structure is used, in terms of easily increasing the halogen atom content.
(2) The halogen atom ratio in the fire retardant (R1) is 45 mass% or more. The ratio may be 60 mass% or more (e.g., 70 mass% or more). Without particular limitation on the upper limit, it may be 95 mass% or less (e.g., 90 mass% or more). These lower limits and upper limits can be used in any combination.

A structural formula of ethylene-1,2-bispentabromophenyl as an example of the fire retardant (R1) is shown below. Ethylene-1,2-bispentabromophenyl has a molecular weight of 971.2, and includes 10 bromine atoms (atomic weight:79.9). Therefore, the ratio of the halogen atom in ethylene-1,2-bispentabromophenyl is 100 × 10 × 79.9/971.2 = 82.3 mass%.

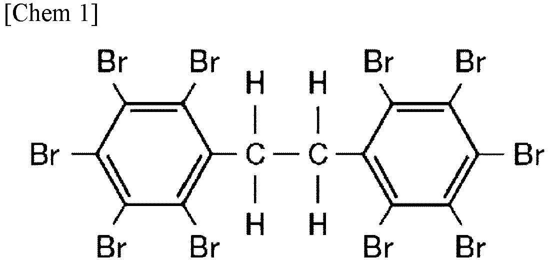

The halogen atom is not particularly limited, and preferable examples of the halogen atom include bromine (Br), fluorine (F), and chlorine (Cl). In terms of the fact that fire retarding effects can be expected from an initial period of abnormal heat generation, the halogen atom may be bromine and/or fluorine, or bromine.

The fire retardant (R1) including such a halogen atom has a larger specific gravity compared with conventionally used phosphorus-based fire retardants, and therefore the volume relative to the added weight can be made small. In this manner, while adding a sufficient amount of fire retardant, the loading amount of the electrode active material can be kept high, and a high capacity can be maintained. In terms of a large specific gravity, the fire retardant (R1) preferably includes bromine (Br). With regard to the number of the halogen atom bonding in the fire retardant (R1), the larger the better. The fire retardant (R1) easily has a large specific gravity by the halogen atom bonding to the cyclic structure. Preferably, the fire retardant (R1) has a specific gravity of, for example, 2.7 or more, or 3.0 or more.

Preferably, the fire retardant (R1) does not include, in the compound structure, a portion that generates water and/or a hydrophilic group. In this case, in the production steps of the secondary battery, water does not easily enter into the battery, and an excellently reliable secondary battery can be achieved. Examples of the portion that generates water include a hydroxy group (-OH), carboxyl group (-COOH), carbonyl group (-CO-), and oxoacid group such as a sulfo group and a phosphoric acid group. Examples of the hydrophilic group include, in addition to the above-described functional group, an amino group.

When the negative electrode active material including silicon (Si) is used as well, the negative electrode active material layer may include the fire retardant (R1). In this case, the halogen atom included in the fire retardant (R1) reacts with Si, which may form a stable coating on the surface of the negative electrode active material. In this manner, high cycle characteristics can be kept, and high durability can be expected.

The fire retardant (R1) may release halogen atoms at a temperature of 180°C or more (e.g., 250°C or more). When a fire retardant releases halogen atoms at a relatively low temperature, halogen atoms may be released in a non-abnormal situation, which may reduce battery characteristics. Preferably, therefore, the fire retardant (R1) does not substantially release halogen atoms under a temperature of less than 180°C.

The fire retardant (R1) may be at least one selected from the group consisting of ethylene-1,2-bispentabromophenyl, ethylenebistetrabromophthalimide, tetrabromobisphenol A, hexabromocyclododecane, 2,4,6-tribromophenol, 1,6,7,8,9,14,15,16,17,17,18,18-dodecachloro pentacyclo (12.2.1.1^{6,9}.0^{2,13}.0^{5,10}) octadeca-7,15-diene (trade name: Dechlorane Plus), and tris (2,2,2-trifluoro ethyl) phosphate. For these fire retardants (R1), commercially available products may be used. Alternatively, the fire retardant (R1) may be synthesized by a known synthesis method.

When the mass ratio between the first electrode active material in the first electrode active material layer and the fire retardant (R1) is represented by, first electrode active material : fire retardant (R1) = 100: a, "a" may be larger than 0 and less than 15. With this configuration, safety can be improved without greatly reducing the battery capacity. The value "a" may be 0.1 or more, 0.3 or more, 0.5 or more, or 1.0 or more. The value "a" may be less than 10, 5.0 or less, 3.0 or less, or 2.0 or less. These lower limits and upper limits can be used in any combinations, as long as it is noncontradictory. For example, the value "a" may be a range of 0.1 or more and less than 7 (e.g., range of 0.1 or more and less than 4.5, a range of 0.1 to 3.0, a range of 0.1 to 2.0, a range of 0.1 to 1.0, a range of 0.5 to 2.0, and a range of 0.5 to 1.0). The ratio of the fire retardant (R1) in the first electrode active material layer can be determined by performing elemental analysis such as EDS on cross sections of the first electrode active material layer.

### (Second fire retardant (R2))

The second fire retardant (R2) included in the separator has, similarly to the fire retardant (R1), fire retarding effects, and effects to suppress excessive heat generation under an abnormal situation of secondary batteries. By being included in the separator, the second fire retardant (R2) can suppress both exothermic reaction generated in the positive electrode, and exothermic reaction generated in the negative electrode. By combining with the fire retardant (R1), the exothermic reaction generated in both the positive electrode and negative electrode in the secondary battery is significantly suppressed, and excessive heat generation under an abnormal situation and ignition can be suppressed effectively.

Preferably, the fire retardant (R2) includes at least one selected from the group consisting of a cyclic compound and a phosphoric acid compound, the cyclic compound including a cyclic structure to which a halogen atom is bonded and having a halogen atom ratio of 45 mass% or more in the fire retardant (R2).

Examples of the fire retardant (R2) include, similarly to the fire retardant (R1), a fire retardant including a halogen atom. The fire retardant (R2) may include a cyclic compound having a cyclic structure to which a halogen atom is bonded, wherein the ratio of halogen atoms in the fire retardant (R2) is 45 mass% or more. Examples of the cyclic compound include those compounds given above as examples for the fire retardant (R1). However, in that case, the fire retardant (R2) may be the same cyclic compound as that of the fire retardant (R1), or may include a cyclic compound different from the fire retardant (R1).

For the fire retardant (R2), a phosphoric acid compound may be used. Preferably, the phosphoric acid compound is a compound that transforms from a solid phase to a liquid phase, or goes through thermal decomposition. Such a phosphoric acid compound may form a coating that covers the surface of base material layer of the separator, either by transforming from a solid phase to a liquid phase to flow on the surface, or by going through thermal decomposition to expand the surface, along with heat generation under an abnormal situation of secondary batteries. The coating functions as a resistance component, and therefore the amount of short circuit electric current that flows between the positive and negative electrodes under an abnormal situation is suppressed, and as a result, an increase in battery temperature can also be suppressed. The temperature for the phosphoric acid compound to transform from a solid phase to a liquid phase, or a temperature that goes through thermal decomposition may be 180°C or more. The temperature for the phosphoric acid compound to transform from a solid phase to a liquid phase or the temperature that goes through the thermal decomposition is, for example, a range of 180°C to 1000°C, preferably 180°C to 900°C, more preferably 180°C to 600°C.

Examples of the phosphoric acid compound include phosphoric acid metal salts such as a phosphoric acid-lithium salt, phosphoric acid-sodium salt, phosphoric acid-potassium salt, phosphoric acid-calcium salt, phosphoric acid-magnesium salt, and phosphoric acid aluminum; condensed phosphoric acid salt such as polyphosphoric acid ammonium, tripolyphosphoric acid sodium, and polyphosphoric acid melamine; and phosphoric acid esters such as trimethyl phosphate and triphenyl phosphate. Preferably, the phosphoric acid compound includes at least one selected from the group consisting of polyphosphoric acid melamine, polyphosphoric acid ammonium, and tripolyphosphoric acid sodium.

For the fire retardant (R2), the above-described cyclic compound having a cyclic structure to which a halogen atom is bonded, and a phosphoric acid compound may be mixed and used.

The fire retardant (R2) may be included in the base material layer in the separator, or may be included in a surface layer of the separator facing the positive electrode or negative electrode.

When the fire retardant (R2) is included in the surface layer of the separator, the separator has a laminate structure including the base material layer and the fire retardant layer including the fire retardant (R2). In that case, the base material layer may or may not include the fire retardant (R2). The base material layer and fire retardant layer may both include the fire retardant (R2). The fire retardant layer may be formed on only one surface layer of the separator facing the positive electrode or negative electrode, or may be formed on both surfaces of the separator so that both of the positive electrode and negative electrode face the fire retardant layer.

The fire retardant layer may be disposed on at least a surface layer of the separator facing the second electrode. That is, when the positive electrode active material layer includes the fire retardant (R1), the fire retardant layer may be disposed on at least a surface layer of the separator facing the negative electrode. Meanwhile, when the negative electrode active material layer includes the fire retardant (R1), the fire retardant layer may be disposed on at least a surface layer of the separator facing the positive electrode. In this case, the effects of suppressing exothermic reactions generated in the second electrode can be increased by the fire retardant layer including the fire retardant (R2). Meanwhile, the exothermic reaction generated in the first electrode is sufficiently suppressed by the fire retardant (R1) included in the first electrode active material layer. Thus, the exothermic reaction generated in both positive electrode and negative electrode of a secondary battery can be efficiently suppressed, and excessive heat generation under an abnormal situation can be effectively suppressed.

In the fire retardant layer, the fire retardant (R2) can be present in a form of aggregate in which particles of the fire retardant (R2) are coagulated with each other, or in a form of aggregate in which particles of the fire retardant (R2) are coagulated through a binder. The fire retardant layer may partially cover the surface of the base material layer, or the fire retardant layer may cover almost all of the surface of the base material layer. The coverage (by area basis) of the surface of the base material layer with the fire retardant layer can be, in terms of suppressing the battery temperature increase under an abnormal situation, 10% or more or 20% or more, and preferably 30% or more. In terms of suppressing the increase in the battery resistance, the coverage of the surface of the base material layer with the fire retardant layer can be 90% or less, 80% or less, or 65% or less.

The coverage of the surface of the base material layer with the fire retardant layer may be 10% or more and 90% or less, 20% or more and 90% or less, 30% or more and 90% or less, 30% or more and 80% or less, or 30% or more and 65% or less.

The coverage with the fire retardant layer can be determined by element mapping on the separator surface, by SEM-EDX (Energy Dispersive X-ray spectrometry) or the like. For example, by performing element mapping on the fire retardant (R2) particles and the base material layer, the coverage of the surface of the base material layer with the fire retardant layer can be calculated.

In the fire retardant layer, the fire retardant (R2) content in the entire fire retardant layer may be 50 mass% or more, 60 mass% or more, 70 mass % or more, 80 mass% or more, or 90 mass% or more. The fire retardant (R2) content in the entire fire retardant layer may be 100 mass% or less, or 95 mass% or less. These lower limits and upper limits can be used in any combinations, as long as it is noncontradictory. The ratio of the fire retardant (R2) in the fire retardant layer can be determined by elemental analysis such as EDS on cross sections of the fire retardant layer.

The average particle size (when forming aggregates, average particle size of primary particles forming each aggregates) of the particles of the fire retardant (R2) in the fire retardant layer may be 0.01 µm to 5 µm, or 0.2 µm to 1 µm. The average particle size of the fire retardant (R2) can be determined as follows. First, 20 fire retardant (R2) particles are randomly selected from an SEM image of the separator surface. Then, the grain boundaries of the selected 20 particles are observed, and upon specifying the contour of the particles, the long diameter of each of the 20 particles is determined, and their average value is regarded as an average particle size of the fire retardant (R2) particles.

Preferably, the fire retardant layer has an average thickness of, in terms of suppressing the battery temperature increase in an abnormal situation, 0.5 µm or more, 1 µm or more, or more preferably 3 µm or more. Preferably, the fire retardant layer thickness is, in terms of suppressing an increase in battery resistance, 4 µm or less. These lower limits and upper limits can be used in any combinations, as long as it is noncontradictory. The average thickness of the fire retardant layer is, when the coverage is less than 100%, an average thickness regarding the region where the base material layer surface is not covered with the fire retardant layer as having a thickness of 0 µm, and can be determined from an SEM image on separator cross sections.

The fire retardant layer of the separator may include, other than the fire retardant (R2), a binder. By including the binder in the fire retardant layer, binding properties of the fire retardant (R2) between the particles thereof and to the base material layer can be improved. That is, the fire retardant layer can be brought into close contact with the base material layer. The fire retardant layer can be formed by depositing a mixture including at least particles of the fire retardant (R2) and binder on the surface of the base material layer. The mixture may be a slurry including the fire retardant (R2) particles, binder, and solvent (dispersion medium). The fire retardant layer can be formed by spraying, dropping, or applying the slurry on the surface of the base material layer and drying. By adjusting the amount of solvent relative to the fire retardant (R2) particles in the slurry and /or the amount of the slurry applied, the coverage with the fire retardant layer and thickness can be controlled.

The binder is not particularly limited, and for example, polyvinylidene fluoride (PVdF), ethylene dimethacrylate, allyl methacrylate, t-dodecylmercaptan, α-methylstyrene dimer, and methacrylic acid are used. The fire retardant layer may include other particles other than the fire retardant (R2) and binder. Examples of the other particles include inorganic particles such as alumina, boehmite, titania, and the like. These inorganic particles contribute to improvement in heat resistance of the separator.

For the base material portion (base material layer) of the separator, woven cloth, nonwoven cloth, and a porous sheet such as microporous film are used.

Woven cloth and nonwoven cloth include fiber as a main component, and for example, 60 mass% or more of the base material layer is formed of fiber. For the fiber, glass fiber, polymer fiber, and pulp fiber, etc. may be used. The nonwoven cloth is a sheet of fiber intertwined without weaving. Woven cloth and nonwoven cloth may include components other than fiber, for example, acid resistant inorganic powder, and polymer as a binder. To include the fire retardant (R2) in the woven cloth or nonwoven cloth, for example, the fire retardant (R2) is put onto the fiber, and the fiber with the fire retardant (R2) is intertwined. In this manner, the base material layer including the fire retardant (R2) can be made.

The microporous film is a porous sheet mainly composed of resin other than the fiber component. When the microporous film is used for the base material layer of the separator, the base material layer including the fire retardant (R2) is produced as follows. A pore-forming agent is added to a synthetic resin, in which the fire retardant (R2) in a range of 0.5 to 50 relative to 100 of resin in a mass ratio is mixed, and extended under a temperature condition of about 100°C. Preferably, the porosity of the microporous film is about 35 to 50%, and the pore diameter is 1 µm or less. Fine fire retardant particles are disposed in the microporous film homogeneously. Preferably, the microporous film is mainly composed of a polymer component. The polymer component is preferably polyolefin, such as polypropylene and polyethylene. Other inorganic particles other than the fire retardant (R2) can be included in the composition. Examples of the inorganic particles include ceramics particles such as silica, alumina, and titania.

The base material layer may be a single layer structure, or may be a laminate structure of a plurality of layers with different compositions. The base material layer thickness is not particularly limited, and for example, in a range of 3 µm to 20 µm.

In the following, examples of the secondary battery and examples of elements of the secondary battery of this embodiment are explained in detail. Known elements may be used for those elements that are not features of the present disclosure. The secondary battery includes, for example, an outer case (battery case), and, a positive electrode, a negative electrode, an electrolyte and a separator each disposed in the outer case. The separator is disposed between the positive electrode and the negative electrode.

The shape of the secondary battery is not limited, and may be cylindrical, prismatic, coin shape, or button shape. The battery case is selected in accordance with the secondary battery shape. The secondary battery may be a non-aqueous electrolyte secondary battery.

### [Negative electrode]

The negative electrode includes a negative electrode active material layer, and as necessary, further includes a negative electrode current collector. The negative electrode active material layer includes a negative electrode active material as an essential component, and as optional components, includes a binder, conductive agent, and thickener. For the binder, conductive material, thickener, etc., known materials can be used. The negative electrode active material layer may include the fire retardant (R1).

The negative electrode active material layer may be formed by applying a negative electrode slurry in which materials of the negative electrode active material layer are dispersed in a dispersion medium on a surface of the negative electrode current collector to form a coating film, and drying the coating film. The dried coating film may be rolled, if necessary. Examples of the dispersion medium include water, alcohol, ether, N-methyl-2-pyrrolidone (NMP), or a mixture solvent thereof. The ratio of the components in the negative electrode active material layer can be adjusted by changing the mixing ratio of the materials of the negative electrode active material. The negative electrode active material layer may be formed on only one surface of the negative electrode current collector, or on both surfaces thereof.

For the negative electrode active material, at least one of a material that electrochemically stores and releases lithium ions, lithium metal, and lithium alloy can be used. For the material that electrochemically stores and releases lithium ions, a carbon material, alloy based material, and the like are used. Examples of the carbon material include graphite, graphitizable carbon (soft carbon), non-graphitizable carbon (hard carbon), and the like. Particularly, graphite with excellent charge/discharge stability and low irreversible capacity is preferable. For the alloy based material, a material containing at least one metal that forms an alloy with lithium can be used, and examples thereof include silicon, tin, a silicon alloy, a tin alloy, and a silicon compound. Silicon oxides or tin oxides of these bonded with oxygen can be used.

For the alloy based material containing silicon, for example, a silicon composite material in which a lithium ion conductive phase and silicon particles dispersed in the lithium ion conductive phase can be used. For the lithium ion conductive phase, for example, a silicon oxide phase, a silicate phase, and/or a carbon phase can be used. A main component (e.g., 95 to 100 mass%) of the silicon oxide phase can be silicon dioxide. Preferably, a composite material composed of a silicate phase and silicon particles dispersed in the silicate phase is preferable in terms of a high capacity and a small irreversible capacity.

The silicate phase may include, for example, at least one selected from the group consisting of Group 1 elements and Group 2 elements of the long-form periodic table. Examples of Group 1 elements and Group 2 elements of the long-form periodic table include lithium (Li), potassium (K), sodium (Na), magnesium (Mg), calcium (Ca), strontium (Sr), barium (Ba), and the like. Other elements such as aluminum (Al), boron (B), lanthanum (La), phosphorus (P), zirconium (Zr), titanium (Ti) may be included in the silicate phase. In particular, the silicate phase containing lithium (hereinafter also referred to as lithium silicate phase) is preferable because of its small irreversible capacity and high initial charge/discharge efficiency.

The lithium silicate phase may be any oxide phase containing lithium (Li), silicon (Si), and oxygen (O), and may include other elements. The atomic ratio O/Si of O to Si in the lithium silicate phase is, for example, larger than 2 and less than 4. Preferably, O/Si is larger than 2 and less than 3. The atomic ratio Li/Si of Li to Si in the lithium silicate phase is, for example, larger than 0 and less than 4. The lithium silicate phase may have a composition represented by the formula: Li_{2z}SiO_{2+z} (0 < z < 2). Preferably, the relation 0 < z < 1 is satisfied, and z = 1/2 is more preferable. Examples of the elements other than Li, Si, and O that can be contained in the lithium silicate phase include iron (Fe), chromium (Cr), nickel (Ni), manganese (Mn), copper (Cu), molybdenum (Mo), zinc (Zn), aluminum (Al), etc.

The carbon phase may be composed of, for example, an amorphous carbon with less crystallinity. The amorphous carbon may be, for example, hard carbon, soft carbon, or something else.

As the negative electrode current collector, a non-porous conductive substrate (metal foil, etc.), and a porous conductive substrate (mesh-body, net-body, punched sheet, etc.) are used. For the material of the negative electrode current collector, stainless steel, nickel, nickel alloy, copper, copper alloy or the like can be exemplified.

### [Positive electrode]

The positive electrode includes a positive electrode active material layer. Typically, the positive electrode includes a positive electrode current collector, and a positive electrode active material layer (positive electrode mixture layer) formed on a surface of the positive electrode current collector. The positive electrode active material layer can be formed by applying a positive electrode slurry in which the positive electrode mixture including the positive electrode active material is dispersed in a dispersion medium on a surface of the positive electrode current collector, and drying the slurry. The dried coating film may be rolled, if necessary. The positive electrode mixture contains a positive electrode active material as an essential component, and may contain a binder, a conductive agent, and the like as an optional component. The positive electrode active material layer may include a fire retardant (R1).

For the positive electrode active material, a lithium composite metal oxide can be used. Examples of the lithium composite metal oxide include LiₐCoO₂, LiₐNiO₂, LiₐMnO₂, LiₐCo_{b}Ni_{1-b}O₂, LiₐCo_{b-}M_{1-b}O_{c}, LiₐNi_{1-b}M_{b}O_{c}, LiₐMn₂O₄, LiₐMn_{2-b}M_{b}O₄, LiGPO₄, and Li₂GPO₄F. M is at least one selected from the group consisting of Na, Mg, Sc, Y, Mn, Fe, Co, Ni, Cu, Zn, Al, Cr, Pb, Sb, and B. G includes at least a transition element (e.g., at least one element selected from the group consisting of Mn, Fe, Co, and Ni). Here, 0 ≤ a ≤ 1.2, 0 ≤ b ≤ 0.9, and 2.0 ≤ c ≤ 2.3. Note that the value "a" indicating the molar ratio of lithium is increased or decreased by charging and discharging.

As the binder and the conductive agent, those exemplified for the negative electrode can be used. As the conductive agent, graphite such as natural graphite or artificial graphite may be used.

For the conductive agent included in the positive electrode active material layer, carbon nanotubes may be used. Carbon nanotubes have a significantly high aspect ratio (ratio of length to diameter). Therefore, carbon nanotubes exhibit a high electrical conductivity with a small amount. By adding carbon nanotubes to the positive electrode active material layer, the battery resistance is reduced, and deterioration due to repetitive charge/discharge can be suppressed. Also, by using carbon nanotubes as the conductive agent, the ratio of the positive electrode active material in the positive electrode active material layer can be made high. Therefore, the secondary battery can have a high capacity.

Meanwhile, in a secondary battery in which carbon nanotube is added to the positive electrode active material layer, compared with a secondary battery in which the same amount of conductive agent such as acetylene black is added, abnormal situations involving heat generation such as internal short circuit may easily occur. However, by including the fire retardant (R1) in the positive electrode active material layer, the battery temperature increase under an abnormal situation can be suppressed. As a result, excellent battery characteristics and safety can be both achieved. Carbon nanotubes may be single walled, double walled, or multi walled. Preferably, single walled carbon nanotubes are used in view of achieving great effects with a small amount. The carbon nanotube with a diameter of 5 nm or less includes many single wall carbon nanotubes. The single wall carbon nanotube can be 50 mass% or more of the entire carbon nanotube.

The carbon nanotube content in the positive electrode active material layer may be, in view of reducing the battery resistance, 0.01 mass% or more, 0.3 mass% or more, or 0.1 mass% or more. Meanwhile, to achieve a high capacity, and suppress increase in the battery temperature under an abnormal situation, carbon nanotube content may be 10 mass% or less, 3 mass% or less, or 1 mass% or less. These lower limits and upper limits can be used in any combinations, as long as it is noncontradictory.

The positive electrode active material content in the positive electrode active material layer can be determined from a sample obtained by taking out only the positive electrode active material layer from a secondary battery in a discharged state. Specifically, first, a secondary battery in a discharged state is disassembled and the positive electrode is taken out. Then, the positive electrode is washed with an organic solvent, and further dried under vacuum, and then only the positive electrode active material layer is removed to obtain a sample. The sample is subjected to thermal analysis such as TG-DTA, by which the ratio of binder component and conductive agent component other than the positive electrode active material can be calculated. When the binder component and conductive agent component includes a plural types of carbon material, the ratio of carbon nanotube thereof can be calculated by performing micro-Raman spectroscopy on cross sections of the positive electrode active material layer.

The outer diameter and length of the carbon nanotube can be determined by image analysis using a scanning electron microscope (SEM). For example, the length can be determined by measuring the lengths and diameters of a plural number of (e.g., about 100 to 1000) carbon nanotubes randomly selected, and averaging them. The outer diameter (in the case of multi-walled carbon nanotube, diameter of outermost tube) of carbon nanotube may be in the range of, without limitation, 0.001 to 0.05 µm. The length of the carbon nanotube is not particularly limited, and in view of securing electron conductivity in the positive electrode active material layer, it may be 0.5 µm or more. In view of the fact that the positive electrode active material has a particle size of generally 1 µm or more and 20 µm or less, length of the carbon nanotube may be about the same length. That is, the length of the carbon nanotube may be, for example, 1 µm or more and 20 µm or less.

Examples of the carbon nanotubes include carbon nanofiber. Various carbon nanotubes are commercially available, and they can be used. Alternatively, carbon nanotubes may be synthesized by a known synthesis method.

The shape and thickness of the positive electrode current collector can be selected from the shapes and ranges according to the negative electrode current collector. Examples of the material of the positive electrode current collector may be stainless steel, aluminum, aluminum alloy, and titanium.

### [Electrolyte]

For the electrolyte, an electrolyte including a solvent and a solute dissolved in the solvent may be used. The solute is an electrolytic salt that goes through ion dissociation in the electrolyte. The solute may include, for example, a lithium salt. The component of the electrolyte other than the solvent and solute is additives. The electrolyte may contain various additives.

For the solvent, a non-aqueous solvent is used. As the non-aqueous solvent, for example, cyclic carbonic acid esters, chain carbonic acid esters, cyclic carboxylic acid esters, chain carboxylic acid esters, or the like is used. Examples of the cyclic carbonic acid esters include propylene carbonate (PC), ethylene carbonate (EC), and vinylene carbonate (VC). Examples of the chain carbonic acid esters include diethyl carbonate (DEC), ethyl methyl carbonate (EMC), and dimethyl carbonate (DMC). Examples of the cyclic carboxylic acid esters include γ-butyrolactone (GBL) and γ-valerolactone (GVL). Examples of the chain carboxylic acid esters include methyl acetate, ethyl acetate, propyl acetate, methyl propionate (MP), ethyl propionate (EP), and the like. A kind of non-aqueous solvent may be used singly, or two or more kinds thereof may be used in combination.

Examples of the non-aqueous solvent also include cyclic ethers, chain ethers, nitriles such as acetonitrile, and amides such as dimethylformamide.

As the lithium salt, for example, chlorine-containing acid lithium salts (LiClO₄, LiAlCl₄, LiB₁₀Cl₁₀, etc.), fluorine-containing acid lithium salts (LiPF₆, LiPF₂O₂, LiBF₄, LiSbF₆, LiAsF₆, LiCF₃SO₃, LiCF₃CO₂, etc.), fluorine-containing acid imide lithium salts (LiN(FSO₂)₂, LiN(CF₃SO₂)₂, LiN(CF₃SO₂) (C₄F₉SO₂), LiN(C₂F₅SO₂)₂, etc.), and lithium halides (LiCl, LiBr, LiI, etc.) may be used. A kind of lithium salt may be used singly, or two or more kinds thereof may be used in combination.

The electrolyte may have a lithium salt concentration of 1 mol/liter or more and 2 mol/liter or less, or 1 mol/liter or more and 1.5 mol/liter or less. By adjusting the lithium salt concentration within the above-described range, an electrolyte with excellent ion conductivity and suitable viscosity can be produced. However, the lithium salt concentration is not limited to the above-described concentration.

The electrolyte may contain other known additives. Examples of the additive include 1,3-propanesultone, methyl benzene sulfonate, cyclohexylbenzene, biphenyl, diphenyl ether, and fluoro benzene.

### [Separator]

A separator is disposed between the positive electrode and the negative electrode. For the separator, a member including the fire retardant (R2), having a high ion permeability and a suitable mechanical strength and insulating characteristics may be used. The separator may be, as described, for example, a microporous thin film, a woven fabric, or a nonwoven fabric. Examples of the separator material include polyolefins such as polyethylene, polypropylene, a copolymer of polyethylene and α-olefin, acrylic resin, polystyrene, polyester, and cellulose.

An example of the secondary battery includes an outer case, and an electrode group and a non-aqueous electrolyte accommodated in the outer case. The electrode group structure is not particularly limited. An example of the electrode group is formed by winding a positive electrode, a negative electrode, and a separator with the separator interposed between the positive electrode and negative electrode. Another example of the electrode group is formed by laminating a positive electrode, a negative electrode, and a separator with the separator interposed between the positive electrode and negative electrode. The form of the secondary battery is not limited, and may be cylindrical, prismatic, coin shape, button shape, or laminate.

The method for producing the secondary battery is not particularly limited, and a known production method can be used, or at least a portion of the known production method can be modified and used.

Examples of the embodiments of the present disclosure are described below in detail with reference to the drawings. For examples of the elements described in the following, the above-described elements can be used. Examples described below can be modified based on the above description. The matters described below can also be applied to the above-described embodiments. In the embodiments described below, elements that are not essential to the secondary battery of the present disclosure can be omitted.

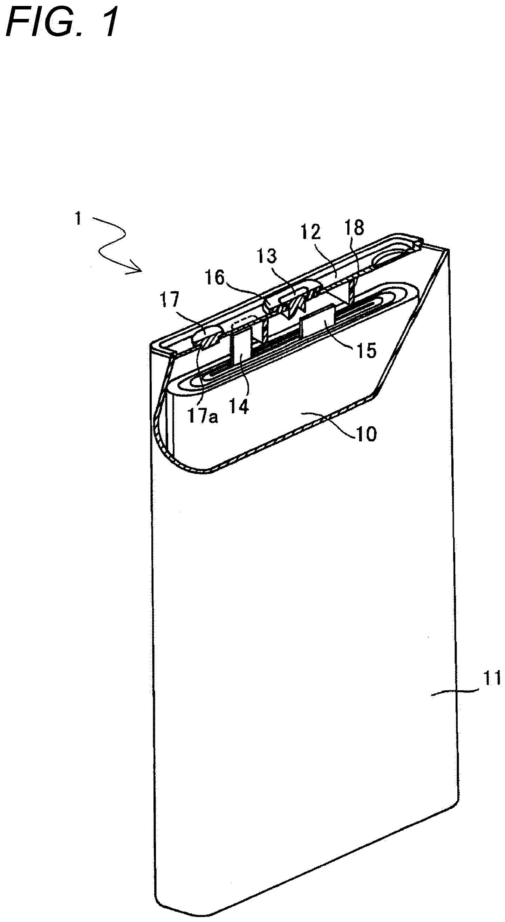

FIG. 1 is a schematic oblique partially cutaway view of a prismatic secondary battery of an embodiment of the present disclosure. The secondary battery 1 shown in FIG. 1 includes a bottomed prismatic battery case 11, an electrode group 10 and an electrolyte (not shown) accommodated in the battery case 11. The electrode group 10 includes an elongated strip negative electrode, an elongated strip positive electrode, and a separator interposed and preventing direct contact therebetween. The electrode group 10 is formed by winding the negative electrode, the positive electrode, and the separator with a flat plate winding core as a center, and removing the core.

One end of the negative electrode lead 15 is attached to the negative electrode current collector of the negative electrode by welding, etc. One end of the positive electrode lead 14 is attached to the positive electrode current collector of the positive electrode by welding, etc. The other end of the negative electrode lead 15 is electrically connected to a negative electrode terminal 13 provided at a sealing plate 12. A gasket 16 is disposed between the sealing plate 12 and the negative electrode terminal 13 to insulate therebetween. The other end of the positive electrode lead 14 is electrically connected to the battery case 11 also working as the positive electrode terminal and connected to the sealing plate 12. A resin-made frame 18 is disposed at an upper portion of the electrode group 10. The frame 18 separates the electrode group 10 from the sealing plate 12, and separates the negative electrode lead 15 from the battery case 11. An opening of the battery case 11 is sealed with a sealing plate 12. An injection port 17a is formed at the sealing plate 12. An electrolyte is injected from the injection port 17a into the battery case 11. Afterwards, the injection port 17a is plugged with a sealing plug 17.

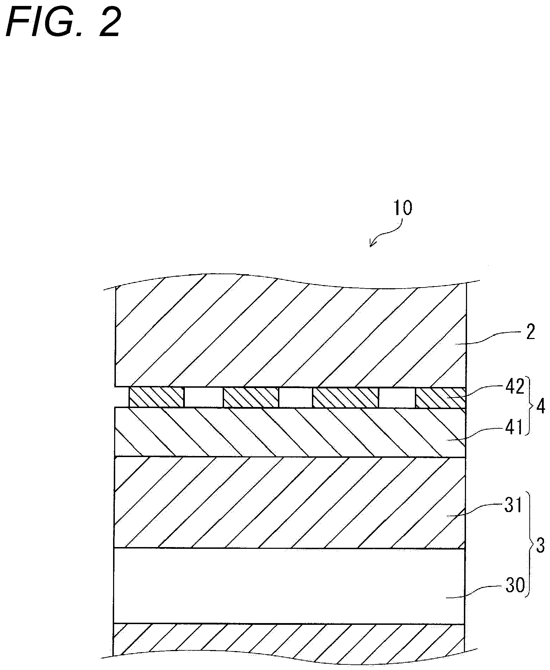

FIG. 2 is a partially enlarged schematic cross sectional view of the electrode group 10. In FIG. 2, the positive electrode 3 has a positive electrode current collector 30 and a positive electrode active material layer 31. The positive electrode active material layer 31 includes a positive electrode active material and a fire retardant (R1) (both not shown). The positive electrode 3 is facing a separator 4. The separator 4 has a base material layer 41 and a fire retardant layer 42. The fire retardant layer 42 includes a fire retardant (R2), and is disposed at a surface layer of the separator 4 not facing the positive electrode 3. In the example of FIG. 2, the fire retardant layer 42 is disposed at a surface of the base material layer 41 so as to face the negative electrode 2.

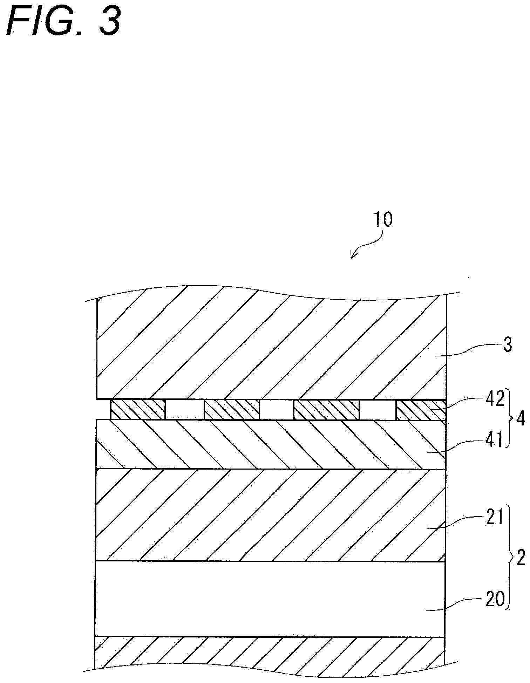

FIG. 3 is a partially enlarged schematic cross sectional view of the electrode group 10, and unlike the electrode group 10 of FIG. 2, shows an example in which the fire retardant layer 42 is disposed at a surface of the base material layer 41 so as to face the positive electrode 3. In FIG. 3, the negative electrode 2 has a negative electrode current collector 20 and a negative electrode active material layer 21. The negative electrode active material layer 21 includes a negative electrode active material and a fire retardant (R1) (both not shown). The negative electrode 2 is facing the separator 4. The separator 4 has a base material layer 41 and a fire retardant layer 42 . The fire retardant layer 42 includes a fire retardant (R2), and is disposed at a surface layer of the separator 4 facing the positive electrode 3.

In any of FIG. 2 and FIG. 3, the fire retardant layer 42 may be disposed at both sides of the base material layer 41 so as to face both of the positive electrode and negative electrode. The base material layer 41 may further include the fire retardant (R2).

### Examples

The secondary battery of the present disclosure is described in more detail in Examples.

### <<Batteries A1 to A9, C1 to C5>>

In this Example, a plurality of secondary battery (non-aqueous electrolyte secondary battery) is made as below and evaluated.

### [Negative electrode production]

For the negative electrode active material, a mixture of a silicon composite material and graphite mixed at a mass ratio of silicon composite material : graphite = 5 : 95 was used. A negative electrode active material, carboxymethyl cellulose sodium (CMC-Na), styrenebutadiene rubber (SBR), water, and as necessary a fire retardant (R1) were mixed at a predetermined mass ratio, thereby preparing a negative electrode slurry. Next, a coating film was formed by applying the negative electrode slurry on a surface of a copper foil (negative electrode current collector). The coating film was dried, and then rolled to form a negative electrode active material layer on both sides of the copper foil.

### [Positive electrode production]

For the positive electrode active material, LiNi_{0.88}Co_{0.09}Al_{0.03}O₂ was used. The positive electrode active material, polyvinylidene fluoride, N-methyl-2-pyrrolidone (NMP), acetylene black, and as necessary a fire retardant (R1) were mixed at a predetermined mass ratio, thereby preparing a positive electrode slurry.

Then, the positive electrode slurry was applied on a surface of an aluminum foil (positive electrode current collector) to form a coating film. After drying the coating film, the coating film was rolled, thereby forming a positive electrode mixture layer on both sides of the aluminum foil.

### [Separator Production]

A polyethylene-made porous sheet including the fire retardant (R2) in the base material was made by the method below, thereby producing a separator S1. The separator S1 had a thickness of 15 µm.

Using two types of polyethylene having a different molecular weight as resin, the resin was mixed with the fire retardant (R2) at a mass ratio of 100:10 to make a synthetic resin. A pore-forming agent was added thereto, and extended at 90°C, thereby producing a separator S1. Separator S1 had a porosity of 40%.

A polyethylene-made porous sheet (separator) S0 (thickness 15 µm) not including the fire retardant (R2) was prepared. The separator S0 had a porosity of 42%.

The fire retardant (R2), polyvinylidene fluoride (PVdF), and N-methyl-2-pyrrolidone (NMP) were mixed at a predetermined mass ratio, thereby preparing a fire retardant layer slurry. The produced slurry was applied to one surface of the porous sheet S0, and dried, thereby forming the fire retardant layer. In this manner, a separator S2 having the fire retardant layer including the fire retardant (R2) at the surface layer was produced. The coverage with the fire retardant layer was 40%.

### [Electrolyte preparation]

To a solvent mixture including ethylene carbonate (EC) and ethyl methyl carbonate (EMC) at a volume ratio of 3:7, LiPF₆ was added as a lithium salt, thereby preparing an electrolyte. The concentration of LiPF₆ in the non-aqueous electrolyte was set to 1.3 mol/liter.

### [Secondary battery production]

A lead-tab was attached to each of the electrodes. Then, the positive electrode and negative electrode were wound in a spiral shape with the separator interposed so that the leads were positioned at the outermost peripheral portion. The electrode group was produced in this manner. Then, the electrode group was inserted into a laminate film-made outer case with an aluminum foil as a barrier layer, and vacuum dried. Next, the non-aqueous electrolyte was injected into the outer case, and the opening of the outer case was sealed. A secondary battery was produced in this manner.

In this Example, the fire retardant (R1) was added to the positive electrode slurry, without adding the fire retardant (R1) to the negative electrode slurry. A plurality of secondary batteries (batteries A1 to A9, C1 to C5) were produced by changing the amount of the fire retardant (R1) contained in the positive electrode active material layer, separator structure, types of fire retardant (R2) included in the separator, and the amount contained thereof. For the fire retardant (R1) included in the positive electrode active material layer, ethylene-1,2-bispentabromophenyl (SAYTEX (registered trademark)-8010 manufactured by Albemarle Japan) was used, as a cyclic compound having a cyclic structure to which a halogen atom is bonded. The ratios of the materials in the positive electrode active material layer were changed by changing their mixing ratios when the positive electrode slurry was prepared. For the fire retardant (R2) included in the separator, ethylene-1,2-bispentabromophenyl, and/or, polyphosphoric acid ammonium as the phosphoric acid compound were used, and blended to the base material layer or the fire retardant layer of the separator at a predetermined content ratio.

In the batteries A1 to A3, a secondary battery was produced using the separator S1.

In the batteries A4 to A9, a secondary battery was produced using the separator S2. In the batteries A4 to A6, the positive electrode and negative electrode were wound in a spiral shape with the separator interposed so that the fire retardant layer of the separator S2 faced the positive electrode when producing the electrode group. In the batteries A7 to A9, the positive electrode and negative electrode were wound in a spiral shape with the separator interposed so that the fire retardant layer of the separator S2 faced the negative electrode when producing the electrode group.

The battery C1 is Comparative Example, and the fire retardant (R1) was not added to the negative electrode active material layer. Also, a porous sheet S0 not including the fire retardant (R2) was used as the separator.

In the battery C2, the fire retardant (R1) was added to the negative electrode active material layer, but the porous sheet S0 not including the fire retardant (R2) was used as the separator.

In the batteries C3 to C5, the fire retardant (R1) was not added to the negative electrode active material layer, but the separator S1 or S2 including the fire retardant (R2) was used.

The produced secondary batteries were evaluated as below.
(1) Nail penetration test
   (a) Under a 25°C environment, the battery was charged at a constant current of 0.5 C until the battery voltage reached 4.2 V, and thereafter, charged at a constant voltage until the electric current value reached 0.02 C.
   (b) Under a 25°C environment, a pointed end of a round nail (diameter 2.7 mm) was allowed to contact at a center portion of the charged battery in (a), and the battery was pierced at a rate of 1 mm/sec, and immediately after detection of a battery voltage drop by internal short circuit, the round nail penetration was stopped.

For 1 second after the short circuit of the battery with the round nail, measurements of the electric current value I of the short circuit electric current and the battery voltage V were continued. Then, the amount of heat generated during 1 second was determined by cumulating the product of the electric current value I and voltage V (electric power) by time.

Some battery production conditions and evaluation results are shown in Table 1. In Table 1, the amount of the fire retardant (R1) contained shows a mass of the fire retardant (R1) (ethylene-1,2-bispentabromophenyl), when setting the positive electrode active material in the positive electrode active material layer as 100. The amount of the fire retardant (R2) contained shows the mass of ethylene-1,2-bispentabromophenyl and polyphosphoric acid ammonium included in the separator, when setting the mass of the separator resin as 100. In Table 1, place of the fire retardant (R2) means, in a case of [in base material], that the fire retardant (R2) is added to the base material layer, in a case of [facing positive electrode], that the fire retardant layer is disposed at a surface of the base material layer facing the positive electrode, in a case of [facing negative electrode], that the fire retardant layer is disposed at a surface of the base material layer facing the negative electrode . In the case of [facing positive electrode] or [facing negative electrode], the fire retardant layer thickness (average thickness) is also shown.

**Table 1**

| Battery | First fire retardant (R1) | Second fire retardant (R2) | | | | Amount of heat generated / [J] |
|---|---|---|---|---|---|---|
| | Content ratio | Content ratio | | Place | Thickness /[µm] | |
| | Cyclic Compound | Cyclic Compound | Phosphoric acid Compound | | | |
| A1 | 1 | 10 | 0 | In base material | - | 32.2 |
| A2 | 1 | 0 | 10 | In base material | - | 36.1 |
| A3 | 1 | 5 | 5 | In base material | - | 24.8 |
| A4 | 1 | 10 | 0 | Facing positive electrode | 3 | 41.6 |
| A5 | 1 | 0 | 10 | Facing positive electrode | 3 | 44.4 |
| A6 | 1 | 0 | 0 | Facing positive electrode | 3 | 34.5 |
| A7 | 1 | 10 | 0 | Facing negative Electrode | 3 | 36.7 |
| A8 | 1 | 0 | 10 | Facing negative Electrode | 3 | 39.1 |
| A9 | 1 | 5 | 5 | Facing negative Electrode | 3 | 30.9 |
| C1 | 0 | 0 | 0 | - | - | 97.3 |
| C2 | 1 | 0 | 0 | - | - | 56.9 |
| C3 | 0 | 10 | 0 | In base material | 3 | 59.8 |
| C4 | 0 | 10 | 0 | Facing positive electrode | 3 | 60.2 |
| C5 | 0 | 10 | 0 | Facing negative Electrode | 3 | 60.9 |

Table 1 shows that with the batteries A1 to A9, in which the positive electrode active material layer includes the fire retardant (R1), and the separator includes the fire retardant (R2), the amount of heat generation during the nail penetration test can be reduced.

With the battery C1 not including the fire retardant, the amount of heat generation is large. With the battery C1, smoke was generated from the battery by nail penetration. With the batteries A1 to A9, no smoke generation was seen.

Comparison between the batteries A1 to A9 shows that, regarding the places where the fire retardant (R2) is included in the separator, reduction in the amount of heat generation was significant in the batteries A1 to A3 in which the fire retardant (R2) is added in the base material. When the material of the fire retardant (R2) and the amount contained were the same, the amount of heat generation was reduced in the order of: the batteries A1 to A3 in which the fire retardant (R2) was added in the base material, the batteries A7 to A9 in which the fire retardant layer including the fire retardant (R2) faced the negative electrode, and the batteries A4 to A6 in which the fire retardant layer including the fire retardant (R2) faced the positive electrode.

Furthermore, as shown with the batteries A3, A6, and A9, when the cyclic compound having a cyclic structure to which a halogen atom is bonded, and a phosphoric acid compound was combined as the fire retardant (R2), the amount of heat generation significantly reduced.

### <<Batteries B1 to B9, C6 to C10>>

In this Example, the fire retardant (R1) was not added to the positive electrode slurry, but the fire retardant (R1) was added to the negative electrode slurry. A plurality of secondary batteries (batteries B1 to B9, C6 to C10) were produced by changing the amount of the fire retardant (R1) contained in the negative electrode active material layer, the separator structure, and types of the fire retardant (R2) included in the separator, and the amount thereof. For the fire retardant (R1) included in the negative electrode active material, ethylene-1,2-bispentabromophenyl (SAYTEX (registered trademark)-8010 manufactured by Albemarle Japan) was used, as a cyclic compound having a cyclic structure to which a halogen atom is bonded. The ratios of the materials in the negative electrode active material were changed by changing their mixing ratios when the negative electrode slurry was prepared. For the fire retardant (R2) included in the separator, ethylene-1,2-bispentabromophenyl, and/or, polyphosphoric acid ammonium as the phosphoric acid compound were used, and blended to the base material layer or the fire retardant layer of the separator at a predetermined content ratio.

Except for these, a plurality of secondary batteries (non-aqueous electrolyte secondary batteries) were produced and evaluated in the same manner as in the secondary batteries A1 to A9, and C1 to C5.

In the batteries B1 to B3, a secondary battery was produced using the separator S1.

In the batteries B4 to B9, a secondary battery was produced using the separator S2. However, in the batteries B4 to B6, the positive electrode and negative electrode were wound in a spiral shape with the separator interposed so that the fire retardant layer of the separator S2 faced the positive electrode when producing the electrode group. In the batteries B7 to B9, the positive electrode and negative electrode were wound in a spiral shape with the separator interposed so that the fire retardant layer of the separator S2 faced the negative electrode when producing the electrode group.

The battery C6 is Comparative Example, and the fire retardant (R1) was not added to the negative electrode active material layer. The porous sheet S0 not including the fire retardant (R2) was used as the separator.

In the battery C7, the fire retardant (R1) was added to the negative electrode active material layer, but the porous sheet S0 not including the fire retardant (R2) was used as the separator.

In the batteries C8 to C10, the fire retardant (R1) was not added to the negative electrode active material layer, but the separator S1 or S2 including the fire retardant (R2) was used.

Some battery production conditions and evaluation results are shown in Table 2. In Table 2, the amount of the fire retardant (R1) contained shows a mass of the fire retardant (R1) (ethylene-1,2-bispentabromophenyl), when setting the negative electrode active material in the negative electrode active material layer as 100. The amount of the fire retardant (R2) contained shows the mass of ethylene-1,2-bispentabromophenyl and polyphosphoric acid ammonium included in the separator, when setting the mass of the separator resin as 100. In Table 2, the place of the fire retardant (R2) means: in a case of [in base material], that the fire retardant (R2) is added to the base material layer; in a case of [facing positive electrode], that the fire retardant layer is disposed at a surface of the base material layer facing the positive electrode; and in a case of [facing negative electrode], that the fire retardant layer is disposed at a surface of the base material layer facing the negative electrode. In the case of [facing positive electrode] or [facing negative electrode], the fire retardant layer thickness (average thickness) is also shown.

**Table 2]**

| Battery | First fire retardant (R1) | Second fire retardant (R2) | | | | Amount of heat generated / [J] |
|---|---|---|---|---|---|---|
| | Content ratio | Content ratio | | Place | Thickness /[µm] | |
| | Cyclic Compound | Cyclic Compound | Phosphoric acid Compound | | | |
| B1 | 1 | 10 | 0 | In base material | - | 34.2 |
| B2 | 1 | 0 | 10 | In base material | - | 35.9 |
| B3 | 1 | 5 | 5 | In base material | - | 25.6 |
| B4 | 1 | 10 | 0 | Facing positive electrode | 3 | 39.5 |
| B5 | 1 | 0 | 10 | Facing positive electrode | 3 | 40.9 |
| B6 | 1 | 5 | 5 | Facing positive electrode | 3 | 32.2 |
| B7 | 1 | 10 | 0 | Facing negative electrode | 3 | 40.9 |
| B8 | 1 | 0 | 10 | Facing negative electrode | 3 | 46.7 |
| B9 | 1 | 5 | 5 | Facing negative electrode | 3 | 38.1 |
| C6 | 0 | 0 | 0 | - | - | 97.3 |
| C7 | 1 | 0 | 0 | - | - | 60.0 |
| C8 | 0 | 10 | 0 | In base material | 3 | 62.2 |
| C9 | 0 | 10 | 0 | Facing positive electrode | 3 | 63.3 |
| C10 | 0 | 10 | 0 | Facing negative electrode | 3 | 63.6 |

Table 2 shows that with the batteries B1 to B9, in which the fire retardant (R1) is included in the negative electrode active material layer, and the separator includes the fire retardant (R2), the amount of heat generation can be reduced during the nail penetration test.

Comparison between the batteries B1 to B9 shows that, regarding the places where the fire retardant (R2) is included in the separator, reduction in the amount of heat generation was significant in the batteries B1 to B3 in which the fire retardant (R2) is added in the base material. When the material of the fire retardant (R2) and the amount contained were the same, the amount of heat generation was reduced in the order of: the batteries B1 to B3 in which the fire retardant (R2) was added in the base material, the batteries B4 to B6 in which the fire retardant layer including the fire retardant (R2) faced the positive electrode, and the batteries B7 to B9 in which the fire retardant layer including the fire retardant (R2) faced the negative electrode.

Furthermore, as shown with the batteries B3, B6, and B9, when a cyclic compound having a cyclic structure to which a halogen atom is bonded, and a phosphoric acid compound was combined as the fire retardant (R2), the amount of heat generation significantly reduced.

### Industrial Applicability

The present disclosure can be used for secondary batteries.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### Description of Reference Numerals

1: non-aqueous electrolyte secondary battery, 2: negative electrode, 3: positive electrode, 4: separator, 10: electrode group, 11: battery case, 12: sealing plate, 13: negative electrode terminal, 14: positive electrode lead, 15: negative electrode lead, 16: gasket, 17: sealing plug, 17a: injection port, 18: frame, 20: negative electrode current collector, 21: negative electrode active material layer, 30: positive electrode current collector, 31: positive electrode active material layer, 41: base material layer, 42: fire retardant layer

## Claims

1. A secondary battery comprising: a first electrode, a second electrode, and a separator interposed between the first electrode and the second electrode, wherein
the first electrode includes a first electrode active material layer,
the first electrode active material layer includes a first electrode active material, and a first fire retardant including a halogen atom, and
the separator includes a second fire retardant.

2. The secondary battery of claim 1, wherein the first fire retardant includes a cyclic structure to which the halogen atom is bonded, and
a ratio of the halogen atom in the first fire retardant is 45 mass% or more.

3. The secondary battery of claim 1 or 2, wherein the first fire retardant releases the halogen atom at a temperature of 180°C or more.

4. The secondary battery of any one of claims 1 to 3, wherein the first fire retardant includes at least one selected from the group consisting of ethylene-1,2-bispentabromophenyl, ethylenebistetrabromophthalimide, tetrabromobisphenol A, hexabromocyclododecane, 2,4,6-tribromophenol, 1,6,7,8,9,14,15,16,17,17,18,18-dodecachloro pentacyclo (12.2.1.1^{6,9}.0^{2,13}.0^{5,10}) octadeca-7,15-diene, and tris (2,2,2-trifluoroethyl) phosphate.

5. The secondary battery of any one of claims 1 to 4, wherein the second fire retardant is included in a base material layer in the separator.

6. The secondary battery of any one of claims 1 to 5, wherein a surface layer of one side or both sides of the separator include a fire retardant layer including the second fire retardant.

7. The secondary battery of claim 6, wherein the fire retardant layer is disposed at at least a surface layer of the separator facing the second electrode.

8. The secondary battery of claim 6 or 7, wherein the fire retardant layer has an average thickness of 0.5 µm to 4 µm.

9. The secondary battery of any one of claims 1 to 8, wherein the second fire retardant includes at least one selected from the group consisting of a cyclic compound including a cyclic structure to which a halogen atom is bonded and having a ratio of the halogen atom relative to the second fire retardant of 45 mass% or more, and a phosphoric acid compound.

10. The secondary battery of claim 9, wherein the second fire retardant includes the phosphoric acid compound, and
the phosphoric acid compound is at least one selected from the group consisting of polyphosphoric acid melamine, polyphosphoric acid ammonium, and tri polyphosphoric acid sodium.

11. The secondary battery of any one of claims 1 to 10, wherein the first electrode is a positive electrode, and the second electrode is a negative electrode.

12. The secondary battery of any one of claims 1 to 10, wherein the first electrode is a negative electrode, and the second electrode is a positive electrode.
